# Europäisches Patentamt
# European Patent Office
# Office européen des brevets

(19)

(11) Publication number: **0 097 625**
**B1**

(12)

# EUROPEAN PATENT SPECIFICATION

(45) Date of publication of patent specification: **30.03.88**

(51) Int. Cl.⁴: $C\ 08\ B\ 37/08$, $A\ 61\ K\ 31/72$

(21) Application number: **83830122.4**

(22) Date of filing: **17.06.83**

(54) **Process for producing substantially pure dermatan sulfate and heparan sulfate glycosaminoglycans, and pharmaceutical use thereof.**

(30) Priority: **18.06.82 IT 4866682**

(43) Date of publication of application:
**04.01.84 Bulletin 84/01**

(45) Publication of the grant of the patent:
**30.03.88 Bulletin 88/13**

(84) Designated Contracting States:
**AT BE CH DE FR GB LI LU NL SE**

(56) References cited:
**FR-A-1 577 360**

**CHEMICAL ABSTRACTS, vol. 77, nr. 13, 25 Sep 1972, Columbus, Ohio (US); A.NAKASHIMA:
"Precipitation of of whale carilage chondroitin sulfate with ethanol. I. Precipitation of chondroitin sulfate in aqueous solution", p. 136, no. 84762a**

The file contains technical information submitted after the application was filed and not included in this specification

(73) Proprietor: **Società Italo-Britannica L. Manetti - H. Roberts & C.**
**Via A. da Noli 4**
**I-50127 Firenze (IT)**

(72) Inventor: **Orzalesi, Giovanni**
**Via di Camerata 71**
**I-50133 Firenze (IT)**
Inventor: **Volpato, Ivo**
**Via Pasquale Landi 2**
**I-56100 Pisa (IT)**
Inventor: **Cappelletti, Renzo**
**Via Fontebuoni 1**
**I-50135 Firenze (IT)**

(74) Representative: **Bazzichelli, Alfredo et al**
**c/o Società Italiana Brevetti S.p.A. Piazza Poli 42**
**I-00187 Roma (IT)**

(56) References cited:
**Pharmacological Research Communications, vol. 11, Nr. 4, 1979, The Italian Phar. Soc. (IT). B. CASU et al: "Fractionation and characterization of glycosaminoglycans of mammalian origin", pp. 297-310**

Courier Press, Leamington Spa, England.

(58) References cited:
**CLINICA CHIMICA ACTA, vol. 68, 1976, Elsevier
Sc. Pub. Co. AMSTERDAM, (NL) J.K. HERD et
al: "Separation of dermatan sulfate from
heparan sulfate in mucopolysaccharidosis
urine by chromatography on sephadex G-75",
pp. 1-9**

## Description

The present invention refers to a process for the preparation of mucopolysaccharides, and in particular of glycosamino glycans and even more particularly of heparan sulfate and dermatan sulfate (also called chondroitin sulfate B) in a substantially pure state, that is, non contaminated by other families of mucopolysaccharides. The process is advantageously suited to application on an industrial scale.

The invention also refers to the therapeutic realization of the products obtained with said process.

Reparan sulfate shows a specific fibrinolytic activity, free of any anti-coagulant and antiplatelet effects, when administered orally.

Dermatan sulfate shows anti-edematous, local anticongestive and tissue healing activity when applied topically.

The process according to the invention is of interest since it allows industrial production of mucopolysaccharides in general, including heparin.

Preparation and purification of glycosamino-glycans (GAG) according to previous methods was difficult and expensive, could only be carried out in small quantities, in the laboratory.

The process according to the present invention is of particular interest since it allows the GAG to be extracted in a reproducible fashion on an industrial scale from a mixture containing it in variable proportions, for example obtained in a known way from organs of connective or vascularized tissue, acting essentially on chimico-physical and biological parameters. The process of the present invention is based on the precipitation of GAG by saline substances, varying the selectivity of the precipitation by adjusting the temperature at which it is run. In this way, the precipitates obtained contain the product compounds, contaminated with only small quantities of by-product contaminants.

These contaminants are removed by means of enzymatic or chemical breakdown treatment, already known in the literature, specific for them. This treatment could not be used on the starting mixture because of the high cost due to the large quantities of GAG which must be broken down, but may be applied advantageously in this case given the minimum quantity of enzyme required for the precipitates mentioned above.

The process according to the invention will be described below on the basis of which this purification and separation from contaminants is carried out.

The starting material consists of an aqueous solution of GAG containing a mixture of various families of GAG in concentrations ranging from 10 to 200 g/liter. An ionizable and water-soluble salt is added to this solution, with ammonium or potassium ion as the cation.

Examples of salts which may be used according to the invention include potassium acetate, potassium chloride, ammonium sulfate, ammonium acetate, potassium sulfate or similar salts, organic or inorganic in nature.

The quantity of salt added must be near the saturation concentration of the salt in water at 25°C, without reaching the saturation point.

Said saturation may therefore range from 70 to 90%, preferably 80%.

The salt may be added in aqueous solution or in its pure state.

The solution is allowed to rest at room temperature, typically for a 48 hour period, so as to obtain a first precipitate.

This first precipitate consists almost entirely of dermatan sulfate in a substantially pure state.

The precipitate is then separated from the liquid, for example by means of filtration, and used to prepare the dermatan sulfate, as described below.

The clear filtrate is then cooled to a temperature of approximately 0°C and left to rest, for example for another 48 hours.

In this way, most of the chondroitin sulfate A is precipitated, along with any other mucopolysaccharides.

This second precipitate is separated from the solution, for example by filtration, and discarded. Alternatively it may be used to prepare other mucopolysaccharides.

The liquid containing the GAG still in solution is then subjected to a desalinification operation to eliminate the salt which was added at the beginning of the process.

This operation may be carried out by means of one or more of the techniques already known for this, of a chemicophysical nature, such as dialysis, precipitation with solvents or ultrafiltration.

The desalinified solution is then dehydrated using a suitable process, for example by means of evaporation under vacuum, and the resulting solid, consisting essentially of heparan sulfate contaminated with residual dermatan sulfate and chondroitin sulfate A, is treated with a specific chemical or enzymatic treatment to eliminate said contaminants. The bacterial enzyme chondroitinase ABC is used for this purpose. In this way, chondroitin sulfate A and B contaminates are removed.

Once the breakdown process is complete, the highly purified heparan sulfate is released from the hydrolysis products by one of the many techniques available to experts in the field, and is then precipitated and dried by treatment with dehydrating agents, preparing in this way the heparan sulfate according to the invention.

The first precipitate described above is already practically pure dermatan sulfate. This precipitate is taken up in water containing the precipitating salt introduced at the beginning the process, and is separated by means of a known process such as dialysis, precipitation with solvents, ultrafiltration, etc.

The second precipitate obtained on cooling the solution to 0°C consists essentially of chondroitin sulfate A.

As mentioned above, from this precipitate one can prepare all the other known mucopolysaccharides included in said precipitate, including heparin.

The degree of purity of the products of the process according to the invention, heparan sulfate and dermatan sulfate, is controlled by means of a highly sensitive and selective electrophoretic method which can detect any GAG contaminants in concentrations below one part per thousand.

Pharmacological Application

The mucopolysaccharide complex has been used therapeutically for some time, with its anticoagulant and clarifying activity.

These activities are directly related to the heparin-like action of mucopolysaccharides or GAG.

Consistent with this action is the GAG activation of antithrombin III.

No direct action by heparin and the GAG complex has been observed toward fibrinolysis.

The preparation of these compounds in a substantially pure state has allowed the discovery of previously unknown pharmaceutical activity for heparan sulfate and dermatan sulfate.

Heparan Sulfate

In vitro studies of fibrinolytic activity with Astrup's fibrin platelet method reveal a direct lytic effect when the fibrin contains plasminogen (presence of lysis halo).

Fibrinolytic activity has been confirmed in vivo as well in rabbits, using the method of measuring the FDP (fibrogen. degradation products), Staphylococcal clumping test, after oral and parenteral administration.

Intravenous administration of 1 mg/kg has a rapid fibrinolytic effect comparable to that of 2.150 I.U. of urokinase per kilogram.

Oral administration of a dose between 1 and 30 mg/kg leads to significant increases in serum levels of fibrogen degradation products; in particular this effect is observed at a relatively low dosage level which is in any case insufficient for this administration route for inducing the known effects of the mucopolysaccharide complex, that is, the anticoagulant and clarifying effects; therefore oral treatment with heparan sulfate is specific for activation of the fibrinolytic system.

Clinical pharmacology studies confirmed the effectiveness of oral treatment on activation of the fibrinolytic process.

Heparan Sulfate, Experimental Pharmacology

Experimental tests in vitro have shown the fibrinolytic action of heparan sulfate. The tests were conducted using the modified Fearnley method, as well as the fibrin platelet method according to Astrup. In the former, the capacity of the previously incubated substance to induce lysis of a coagulum of dilute mouse blood was demonstrated, experimentally formed by adding thrombin. The second case demonstrated a lytic action on fibrin platelets in the presence of a plasminogen, on which the substance shows activation at a concentration of 100 mg/ml comparable to the activity of a 25—50 I.U./ml dose of urokinase.

In vivo tests were performed designed to show activation of fibrinolysis in New Zealand rabbits of both sexes treated intravenously and intraduodenally (with tying of the pylorus) at doses ranging respectively from 0,5—1 and 1—30 mg/kg for the two administration routes.

These tests showed that intravenous treatment at a dose of 1 mg/kg had a clear fibrinolytic effect after 30 minutes which was maintained until 180 minutes after administration, inhibiting platelet aggregation due to ADP, collagen, thrombin; it acted as an anticoagulant and clarifier of plasmatic lipids.

Oral treatment (intraduodenal), on the other hand, was shown to be significantly effective and selective only in the activation of fibrinolysis; this effect appears at 1—10 mg/kg doses of heparan sulfate 6 hours after treatment, and is highly significant at the 30 mg/kg after 2 hours. It is dissociated from the anticoagulant or clarifying effect.

However, in terms of the ends established for therapeutic use, it should be noted that oral treatment up to a 10 mg/kg dose has a significant fibrinolytic effect with no anti-coagulant activity; the latter is seen when the compound is administered parenterally.

Clinical pharmacology studies with patients suffering from venopathy and arteripathy in general, treated orally in a gastro-resistant fashion with doses from 200—600 mg/day, revealed a specificity of the fibrinolytic effect for this administration route, documented in the laboratory as well as in therapy.

In fact laboratory studies show a significant increase in serum FDP, an increase in plasma fibrinogen and plasminogen consumption, and considerably reduced euglobulin lysis times, while no variation is seen in the parameters involved in the coagulative and aggregative process and in the lipid level.

From a therapeutic point of view, all the phenomena are observed which indicate refression of a preformed thrombus, achieving clinical cure in many cases.

Dermatan Sulfate

Dermatan sulfate, or chondroitin sulfate B, is contained in large amounts in connective tissue, and in particular in fibrous connective tissue; its presence is related to the evolution in a fibrous direction of primitive connective tissue reticular in character.

When the connective tissue tends to assume aspects of more advanced stages, dermatan sulfate tends to decrease.

Evolution of the fibrillary order itself of the granulation tissue toward a fibrous organization, and thus toward cicatricial tissue, is also accompanied by a considerable increase in chondroitin sulfate B content.

This mucopolysaccharide is thought to be implicated in the formation of collagen and elastic fibrils, as well as important in the formation of the amorphous substance present between the collagen fibers.

Therefore, dermatan sulfate is a mucopolysaccharide closely correlated to the formation and evolution of collagen tissue and so to the formation this tissue performs.

## Deramatan Sulfate, Pharmacological Properties

In vivo pharmacological studies in test animals have shown that dermatan sulfate in a preparation for topical use administered cutaneously to rabbits, effects local pharmacological action characteristic of this mucopolysaccharide family.

## Antiedemigen and Local Anticongestive Activity

It is known that acute dermatitis experimentally induced by UV rays faithfully simulates the general conditions of tissue inflammation and necrosis which are always accompanied by trophic and microcirculatory disturbances as well as by edematous congestion in the surrounding area.

It has been shown that the substance, when applied repeatedly to rabbit skin, exhibits protective activity toward dermatitis induced by repeated radiation.

New Zealand rabbits of both sexes were used, divided into a control group, a group treated with placebo (excipient) and a third group treated with the preparation of dermatan sulfate for topical use.

The rabbits were treated with a depilatory in a certain lateral dorsal area followed three days later by the first treatment with 1 g of the preparation; it was administered twice daily for 8 days consecutively, for a total dose of 2 g per rabbit/day.

Three hours after the daily treatment all the animals were subjected to UV radiation on said skin area in a completely standardized manner; the thickness of the skin in the area involved was also measured daily before the radiation. Four days after the end of treatment, the animals were sacrificed; the irradiated areas of the skin taken and fixed in buffered isotonic formalin.

The study showed clearly that treatment with dermatan sulfate has a significant trophic, anticongestive and antiedemigenic effect toward dermatitis induced by UV radiation, while the placebo preparation had no effect on the parameters considered.

In fact histological examination showed that while the control animals and the group treated with placebo exhibited the same degree of wrinkling and thinning of the skin, associated with mild glandular atrophy and occasional inflammatory infiltrates in the derma, the animals treated with dermatan sulfate showed no cutaneous alteration.

## Action on Healing of a Surgical Wound

New Zealand rabbits divided into a non-treated control group, a group treated with placebo and a group treated with dermatan sulfate were first depilated in the interscapular area and anesthetized locally with lidocain; a 1 cm² area of skin was then removed surgically.

The placebo and the active principle preparations were applied, in quantities corresponding to 0.333 g/kg of preparation, two hours apart under aseptic conditions every 24 hours for 10 days. The condition of the wound was checked daily, and at the end all the animals were subjected to scheduled death. The skin area was removed along with the corresponding connective area of the subcutaneous layer.

The tissue sample was placed in buffered isotonic formalin solution and examined histologically after hematoxylin-eosin staining.

The daily observation of the wound and the relative reparative-healing processes showed reduced thickness of the edges of the wound, improved trophism and reduced closing times for the edges of the wound in the animals treated with dermatan sulfate with respect to those treated with excipient only and to the controls.

Histological examination of the control animals showed a condition of chronic and sclerosic lesion with thick and fibrotic cicatricial connective tissue, with the edges of the wound affected by hyperkeratosis and acanthosis. The animals treated with placebo showed a completely analogous picture. Treatment with dermatan sulfate on the other hand prevented chronic and sclerosic lesions, fibrotic thickening of the cicatricial connective tissue and acanthosis of the edges of the wound.

## Clinical Pharmacology

Dermatan sulfate was tested in preparations for topical use on patients with superficial lesions involving the cutaneous and subcutaneous layer, with various degrees of ulceration and with varying difficulty in healing (in some cases due to association with metabolic disturbances related to collagen synthesis).

Treatment was administered under strictly aseptic conditions, repeated twice daily, for a variable length of time depending on the lesion, in comparison with another group of patients treated under the same conditions with a placebo preparation. The patients treated with dermatan sulfate showed more rapid healing (30% reduction in the time required for the edges of the lesion to close) and better development of connective cicatricial tissue, as well as improvement in the macroscopic condition of the tissue after the repair process: absence of fibrous evolution, telangiectasis and pigmentation of the cicatricial tissue in the cases treated with the test substance, although these signs were always present in the group treated with placebo.

Therefore, the object of the present invention is pharmaceutical compositions containing heparan sulfate as the active fibrinolytic agent, prepared by means of the process according to the invention, administered in an oral dose of 1—30 mg/kg daily.

The object of the present invention is also pharmaceutical compositions for topical use, containing dermatan sulfate as active antiedemigenic, local anti-congestive and healing agent, prepared by means of the process according to the invention.

## Claims

1. Process for producing substantially pure dermatan sulfate and heparan sulfate, starting from a mixture of mucopolysaccharides in aqueous solution in a concentration from 10 to 200 g/liter, characterized by operations of:
a) introducing in said starting solution a water soluble ionizing salt consisting of ammonium or potassium as the cation part, up to a concentration of 70—90% of the saturation level of said salt at 25°C, so as to produce at room temperature a first precipitate containing dermatan sulfate in a substantially pure state;
b) separating said precipitate from the solution and recovering the substantially pure dermatan sulfate as first product;
c) cooling the solution removed from the precipitate to approximately 0°C in order to produce a second precipitate at said temperature containing chondroitin sulfate A;
d) removing said second precipitate from the solution;
e) separating from the residual solution the salt introduced in operation (a) so as to prepare a desalinified solution;
f) removing the water from said desalinified solution so as to prepare a solid containing heparan sulfate contaminated with other glycosaminoglycanes;
g) subjecting said solid to enzymatic treatment with chondroitinase ABC, so as to eliminate said impurities and recover the heparan sulfate substantially pure as second product.
2. Process according to claim 1, in which said salt is potassium acetate, potassium chloride, ammonium acetate or potassium sulfate.
3. Process according to claim 1, in which said concentration in operation (a) is 80% of the saturation concentration at 25°C.
4. Process according to claim 1, in which said separation operation (e) is an operation of dialysis, precipitation with solvents or ultrafiltration.
5. Use of heparan sulfate obtained by the process as claimed in claim 1 for the manufacturing of a medicament having a selective fibrinolitic activity for the treatment of thrombopathies.
6. Medicinal preparation for the treatment of thrombopathies, in a form adapted to oral administration, comprising a pharmacologically effective amount of substantially pure heparan sulfate obtained by the process as claimed in claim 1 and a pharmacologically inert excipient.
7. Use of dermatan sulfate obtained by the process as claimed in claim 1 for the manufacturing of a medicament having antiedemigenic, local anti-congestive and healing activity for the treatment of external lesions.

8. Medicinal preparation for the treatment of external lesions, in a form adapted to topic application, comprising a pharmacologically effective amount of substantially pure dermatan sulphate obtained by the process as claimed in claim 1 and a pharmacologically inert excipient.

## Patentansprüche

1. Verfahren zur Herstellung von wesentlich reinem Dermatansulfat und Heparansulfat wobei man von einem Gemisch aus Mucopolysacchariden in wässeriger Lösung, bei einer Konzentration von 10 bis 200 g/Liter ausgeht, dadurch gekennzeichnet, dass:
a) man der Ausgangslösung ein wasserlösliches, ionisierendes, als Kationteil aus Ammonium oder Kalium bestehendes Salz zusetzt, in einer Konzentration von 70 bis 90 % des Sättigungsgrades des Salzes bei 25°C, wobei ein erster Niederschlag, der Dermatansulfat in wesentlich reinem Zustand enthält, bei Raumtemperatur hergestellt wird;
b) man den Niederschlag von der Lösung trennt und das wesentlich reine Dermatansulfat als erstes Produkt gewinnt;
c) die von dem Niederschlag getrennte Lösung auf etwa 0°C gekühlt wird, womit bei dieser Temperatur ein zweiter Niederschlag der Chondroitinsulfat A enthält, gewonnen wird;
d) man diesen zweiten Niederschlag von der Lösung entfernt;
e) man das in der Stufe (a) eingebrachte Salz von der verbleibenden Lösung trennt, wobei eine entsalzte Lösung gewonnen wird;
f) man das Wasser von der entsalzten Lösung entfernt, wobei ein fester Stoff gewonnen wird, der Heparansulfat enthält, das durch weitere Glykosaminoglukanen verunreinigt ist;
g) man diesen Stoff durch enzymatische Behandlung mit Chondroitinase ABC weiterarbeitet, wobei die Verunreinigungen entfernt werden und wesentlich reines Heparansulfat als zweites Produkt gewonnen wird.
2. Verfahren gemäss Anspruch 1, wobei das Salz Kaliumazetat, Kaliumchlorid, Ammoniumazetat oder Kaliumsulfat ist.
3. Verfahren gemäss Anspruch 1, wobei die Konzentration in Stufe (a) 80% bezüglich der Sättigungskonzentration bei 25°C ist.
4. Verfahren gemäss Anspruch 1, wobei die Trennungsstufe (e) ein Dialysis-, Lösungsmittelausfällungs- oder Ultrafiltrationsverfahren ist.
5. Verwendung von Heparansulfat gewonnen durch das in Anspruch 1 geschilderte Verfahren, für die Herstellung eines Arzneimittels mit selektiver fibrinolytischer Wirkung für die Behandlung von Trombopathien.
6. Arzneivorbereitung für die Behandlung von Trombopathien, in einer für orale Verabreichung geeigneten Form, die eine pharmakologisch wirksame Menge von wesentlich reinem, durch das im Anspruch 1 angesprochene Verfahren hergestelltem Heparansulfat und ein pharmazeutisch annehmbares Exzipient enthält.

7. Verwendung von Dermatansulfat gewonnen durch das in Anspruch 1 geschilderte Verfahren, für die Herstellung eines Arzneimittels mit Anti-ödembildungs-, lokal Antikongestions- und Heilungswirkung für die Behandlung von äussereren Verletzungen.

8. Arzneivorbereitung für die Behandlung von äussereren Verletzungen in einer für topische Anwendung geeigneten Form, die eine pharmakologisch wirksame Menge von wesentlich reinem, durch das im Anspruch 1 angesprochene Verfahren hergestelltem Dermatansulfat und ein pharmazeutisch annehmbares Exzipient enthält.

## Revendications

1. Procédé pour la production de dermatane et héparanesulfate substantiellement purs à partir d'un mélange de mucopolysaccharides en solution aqueuse dans une concentration de 10 à 200 g/litre, caractérisé par les opérations de:

a) introduire dans la solution de départ un sel ionisant soluble dans l'eau, composé d'ammonium ou potassium en tant que partie cationique, jusqu'à une concentration de 70—90% du niveau de saturation dudit sel à 25°C, pour produire à la température ambiante un premier précipité qui contien du dermatane-sulfate à l'état substentiellement pur.

b) séparer ledit précipité de la solution et récupérer le dermatane-sulfate substentiellement pur comme premier produit;

c) refroidir la solution éloignée du précipité à 0°C environ pour produire un second précipité à ladite température, qui contient chondroitine-sulfate A;

d) éloigner ledit second précipité de la solution;

e) séparer de la solution résidue le sel introduit dans l'opération (a), pour préparer une solution dessalée;

f) éloigner l'eau de la solution dessalée pour préparer un solide qui contient du heparane-sulfate contaminé par des autres glycosaminoglycanes;

g) soumettre ledit solide à un traitement enzymatique par chondroitinase ABC, pour éliminer ces impurités et récupérer le héparane-sulfate substantiellement pur comme second produit.

2. Procédé selon la revendication 1, où ledit sel est acétate de potassium, chlorure de potassium, acétate d'ammonium, ou sulfate de potassium.

3. Procédé selon la revendication 1, où la concentration dans l'opération (a) est 80% de la concentration de saturation à 25°C.

4. Procédé selon la revendication 1, où ladite opération (e) est une opération de dialyse, précipitation par solvant, ou ultrafiltration.

5. Utilisation de héparane-sulfate obtenu par le procédé revendiqué dans la revendication 1, pour la production d'un médicament ayant une activité fibrinolytique sélective pour le traitement de thrombopathies.

6. Préparation médicinale pour le traitement de thrombopathies, en forme apte à l'administration orale, comprenant une quantité pharmacologiquement efficace de heparane-sulfate substantiellement pur, obtenu par le procédé revendiqué dans la revendication 1, et un excipient pharmacologiquement inerte.

7. Utilisation de dermatane-sulfate obtenu par le procédé revendiqué dans la revendication 1, pour la fabrication d'un médicament ayant une activité antioedémigène, anticongestivante locale et de cicatrisation pour le traitement de lésions exernes.

8. Préparation médicinale pour le traitement de lésions externes, en forme apte à l'application topique, comprenant une quantité pharmacologiquement efficace de dermatane-sulfate substantiellement pur obtenu par le procédé revendiqué dans la revendication 1, et un excipient pharmacologiquement inerte.